# EUROPEAN PATENT APPLICATION

(11) **EP 2 680 204 A2**
(43) Date of publication of application: **01.01.2014**
(21) Application number: 13002311.2
(22) Date of filing: 30.04.2013
(51) Int. Cl.: G06Q 20/32, G06Q 20/42, H04M 1/67

(54) **Mobile terminal and controlling method thereof**

(30) Priority: 27.06.2012 KR 20120069324
(71) Applicant: LG Electronics, Inc., Seoul, 150-721 (KR)
(72) Inventor: Chi, Jumin, 153-801 Seoul (KR); Cho, Myeonghwan, 153-801 Seoul (KR); kim, Bohee, 153-801 Seoul (KR)
(74) Representative: Beyer, Andreas

(57) **Abstract**

A mobile terminal and controlling method thereof are disclosed, which facilitates a terminal to be used in further consideration of user's convenience. The present invention includes externally receiving a request for a payment in a state of a locked screen of a display unit using short range communication, outputting a payment related information on the requested payment and a screen unlock means, and if the locked screen is unlocked via the screen unlock means, authorizing the requested payment. According to at least one of embodiments of the present invention, even if a display is turned off, a payment service can be available quickly and conveniently using NFC (near field communication) function.

## Description

This application claims the benefit of earlier filing date and right of priority to Korean Application No.10-2012-0069324, filed on June 27, 2012, the contents of which are hereby incorporated by reference herein in their entirety.

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for facilitating a terminal to be used in further consideration of user's convenience.

### Discussion of the Related Art

A mobile terminal is a device which may be configured to perform various functions. Examples of such functions include data and voice communications, capturing images and video via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. And, the mobile terminals can be further classified into handheld terminals and vehicle mount terminals according to availability for hand-carry.

There are ongoing efforts to support and increase the functionality of mobile terminals. Such efforts include software and hardware improvements, as well as changes and improvements in the structural components which form the mobile terminal.

As a mobile terminal is equipped with an NFC (near field communication) function, it is able to support a payment service function for price payment. And, an NFC function of a related art is enabled only if a display is turned on. However, since the NFC function is enabled in a manner that a user just tags the mobile terminal, it is uncomfortable for the user of the mobile terminal to turn on the display in order to use the NFC function. And, the demand for a method of relieving the discomfort is rising.

### SUMMARY OF THE INVENTION

Accordingly, embodiments of the present invention are directed to a mobile terminal and controlling method thereof that substantially obviate one or more problems due to limitations and disadvantages of the related art.

An object of the present invention is to provide a mobile terminal and controlling method thereof, by which an NFC (near field communication) function can be used despite that a display is turned off.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, as embodied and broadly described herein, a mobile terminal according to the present invention may include a short range communication unit, a display unit, a user input unit, and a controller, if a payment request is externally received via the short range communication unit in a state of a locked screen of the display unit, outputting a payment related information and a screen unlock means to the locked screen, the controller, if the locked screen is unlocked via the screen unlock means, authorizing the payment request.

In another aspect of the present invention, a method of controlling a mobile terminal according to the present invention may include the steps of externally receiving a request for a payment in a state of a locked screen of a display unit using short range communication, outputting a payment related information on the requested payment and a screen unlock means, and if the locked screen is unlocked via the screen unlock means, authorizing the requested payment.

In another aspect of the present invention, a mobile terminal supportive of NFC (near field communication) technology according to the present invention may include a display unit, a user input unit and a controller receiving a request for a payment using the NFC technology in a state of a locked screen, the controller outputting information on the requested payment to the display unit, the controller, if a signal for unlocking the locked screen is received via the user input unit, authorizing the requested payment.

In a further aspect of the present invention, a method of controlling a mobile terminal supportive of NFC (near field communication) technology according to embodiment of the present invention may include the step of if a preset event occurs, controlling an offer of at least one 1^{st} service except a payment service among a plurality of services having the NFC technology applied thereto to be held until a 1^{st} time.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:
- FIG. 1: is a block diagram of a mobile terminal according to one embodiment of the present invention;
- FIG. 2A: is a front perspective diagram of a mobile terminal according to one embodiment of the present invention;
- FIG. 2B: is a rear perspective diagram of a mobile terminal according to one embodiment of the present invention;
- FIG. 3: is a diagram to describe a service associated with NFC (near field communication) applicable to the present invention;
- FIG. 4: is a diagram of display screen configuration to implement a process for making a payment using an NFC function of a terminal according to a related art;
- FIG. 5: is a diagram of display screen configuration to implement a process for making a payment using an NFC function according to one embodiment of the present invention;
- FIG. 6: is a diagram of display screen configuration to implement a method of authorizing a requested payment according to another embodiment of the present invention;
- FIG. 7: is a diagram of display screen configuration to implement a method of authorizing a requested payment by a user input according to another embodiment of the present invention;
- FIG. 8: is a diagram of display screen configuration for examples of a method of selecting a pay means from a plurality of pay means;
- FIG. 9: is a diagram of display screen configuration for another example of a method of selecting a pay means from a plurality of pay means;
- FIG. 10: is a diagram of display screen configuration for further example of a method of selecting a pay means from a plurality of pay means;
- FIG. 11: is a diagram of display screen configuration to implement a method of authorizing a requested payment by a user input according to a further embodiment of the present invention;
- FIG. 12: is a diagram of display screen configuration for another further example of a method of selecting a pay means from a plurality of pay means; and
- FIG. 13: is a diagram of display screen configuration for another example of a popup window for requesting a payment authorization.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

The present invention can be applicable to a various types of terminals. Examples of such terminals include mobile terminals, such as mobile phones, user equipment, smart phones, mobile computers, digital broadcast terminals, personal digital assistants, portable multimedia players (PMP) and navigators.

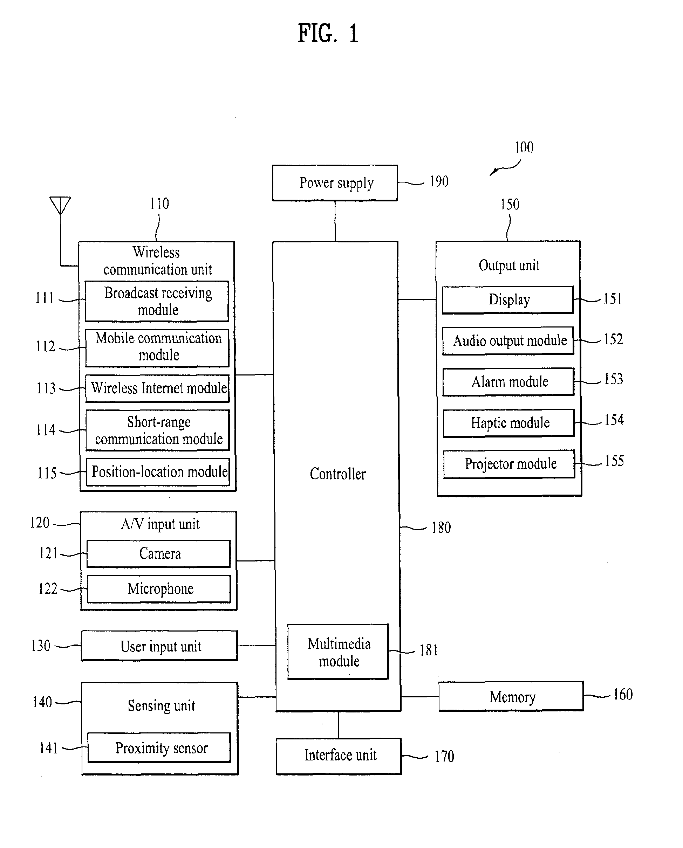

Fig. 1 is a block diagram of a mobile terminal 100 in accordance with an embodiment of the present invention. Fig. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

At least two broadcast receiving modules 111 can be provided to the mobile terminal 100 in pursuit of simultaneous receptions of at least two broadcast channels or broadcast channel switching facilitation.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.) via a mobile network such as GSM (Global System for Mobile communications), CDMA (Code Division Multiple Access), WCDMA (Wideband CDMA) and so on. Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA(High Speed Downlink Packet Access), GSM, CDMA, WCDMA, LTE (Long Term Evolution) etc.

Wireless internet access by Wibro, HSPDA, GSM, CDMA, WCDMA, LTE or the like is achieved via a mobile communication network. In this aspect, the wireless internet module 113 configured to perform the wireless internet access via the mobile communication network can be understood as a sort of the mobile communication module 112.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

According to the current technology, the GPS module 115 is able to precisely calculate current 3-dimensional position information based on at least one of longitude, latitude and altitude and direction (or orientation) by calculating distance information and precise time information from at least three satellites and then applying triangulation to the calculated information. Currently, location and time informations are calculated using three satellites, and errors of the calculated location position and time informations are then amended using another satellite. Besides, the GPS module 115 is able to calculate speed information by continuously calculating a real-time current location.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal.

For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100, and free-falling of the mobile terminal 100. As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, a haptic module 154, a projector module 155 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optical transmittive type, which can be named a transparent display. As a representative example for the transparent display, there is TOLED (transparent OLED) or the like. A rear configuration of the display 151 can be implemented in the optical transmittive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and a sensor for detecting a touch action (hereinafter called 'touch sensor') configures a mutual layer structure (hereinafter called 'touchscreen'), it is able to use the display 151 as an input device as well as an output device. In this case, the touch sensor can be configured as a touch film, a touch sheet, a touchpad or the like.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know whether a prescribed portion of the display 151 is touched.

Referring to FIG. 1, a proximity sensor (141) can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The projector module 155 is the element for performing an image projector function using the mobile terminal 100. And, the projector module 155 is able to display an image, which is identical to or partially different at least from the image displayed on the display unit 151, on an external screen or wall according to a control signal of the controller 180.

In particular, the projector module 155 can include a light source (not shown in the drawing) generating light (e.g., laser) for projecting an image externally, an image producing means (not shown in the drawing) for producing an image to output externally using the light generated from the light source, and a lens (not shown in the drawing) for enlarging to output the image externally in a predetermined focus distance. And, the projector module 155 can further include a device (not shown in the drawing) for adjusting an image projected direction by mechanically moving the lens or the whole module.

The projector module 155 can be classified into a CRT (cathode ray tube) module, an LCD (liquid crystal display) module, a DLP (digital light processing) module or the like according to a device type of a display means. In particular, the DLP module is operated by the mechanism of enabling the light generated from the light source to reflect on a DMD (digital micro-mirror device) chip and can be advantageous for the downsizing of the projector module 151.

Preferably, the projector module 155 can be provided in a length direction of a lateral, front or backside direction of the mobile terminal 100. And, it is understood that the projector module 155 can be provided to any portion of the mobile terminal 100 according to the necessity thereof.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures (or photo), moving pictures, etc. And, a recent use history or a cumulative use frequency of each data (e.g., use frequency for each phonebook, each message or each multimedia) can be stored in the memory unit 160. Moreover, data for various patterns of vibration and/or sound outputted in case of a touch input to the touchscreen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern (or image) recognizing process for recognizing a writing input and a picture drawing input carried out on the touchscreen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

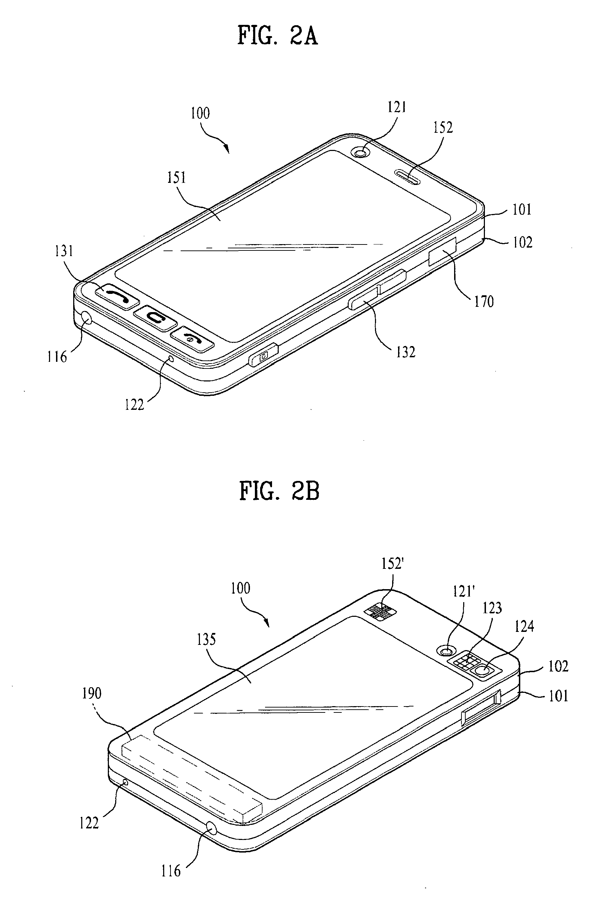

FIG. 2A is a front perspective diagram of a mobile terminal according to one embodiment of the present invention.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (casing, housing, cover, etc.) configuring an exterior thereof. In the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling. Content inputted by the first or second manipulating unit 131 or 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

FIG. 2B is a perspective diagram of a backside of the terminal shown in FIG. 2A.

Referring to FIG. 2B, a camera 121' can be additionally provided to a backside of the terminal body, and more particularly, to the rear case 102. The camera 121 has a photographing direction that is substantially opposite to that of the former camera 121 shown in FIG. 21A and may have pixels differing from those of the firmer camera 121.

Preferably, for instance, the former camera 121 has low pixels enough to capture and transmit a picture of user's face for a video call, while the latter camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication or the like. The antenna 124 constructing a portion of the broadcast receiving module 111 shown in FIG. 1 can be retractably provided to the terminal body.

A power supply unit 190 for supplying a power to the terminal 100 is provided to the terminal body. And, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured in a light transmittive type like the display 151. In this case, if the display 151 is configured to output visual information from its both faces, it is able to recognize the visual information via the touchpad 135 as well. The information outputted from both of the faces can be entirely controlled by the touchpad 135. Alternatively, a display is further provided to the touchpad 135 so that a touchscreen can be provided to the rear case 102 as well.

The touchpad 135 is activated by interconnecting with the display 151 of the front case 101. The touchpad 135 can be provided in rear of the display 151 in parallel. The touchpad 135 can have a size equal to or smaller than that of the display 151.

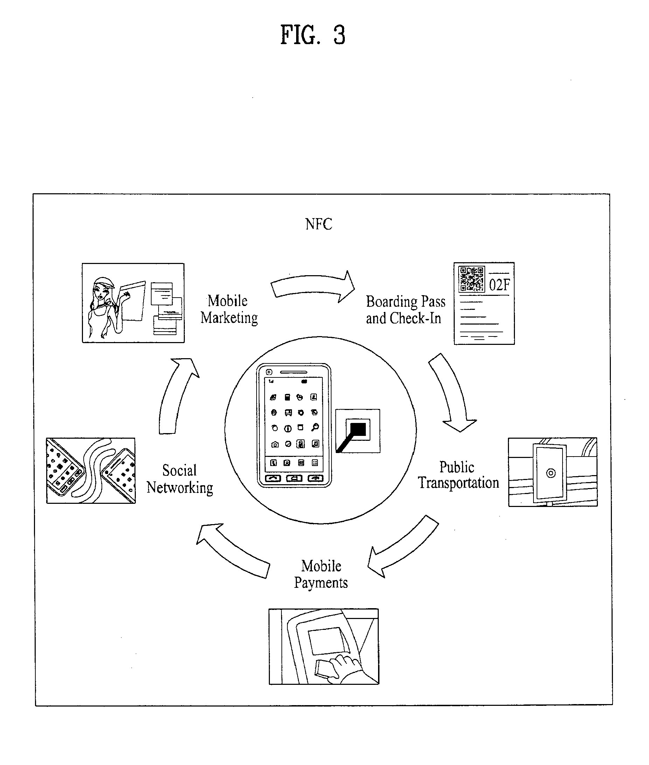

In the following description, a configuration for providing the aforesaid projector module to the slider type mobile terminal 100 is further explained with reference to FIG. 3A and FIG. 3B.

FIG. 3A and FIG. 3B are perspective diagrams of a mobile terminal according to another embodiment of the present invention.

Referring to FIG. 3A and FIG. 3B, In a mobile terminal 100, a projector body 227 having a projector module 155 is rotatably assembled to a first body 200 loaded with a display unit 151. As mentioned in the foregoing description, a second body 205 can be assembled to the first body 200 in a manner of sliding relative to the first body 200.

Referring to FIG. 3A, while the second body 205, which is assembled to the first body 200 to slide relative thereto, is in the open position, the projector body 227 rotatably assembled to the first body 200 is rotated. The projector body 227 can be hinged to the first body 200. And, it is able to adjust a projection angle of the projector body 227 in case of projecting a picture or image using the projector 155 provided to the projector body 227. And, a camera 121 can be provided to the projector body 227 to photograph the image or picture projected by the projector 155.

Referring to FIG. 3B, the first and second bodies 200 and 205 shown in FIG. 3A return to the closed position and the projector body 227 also return to an original position.

In the following description, embodiments relating to a control method implemented in the above-configured mobile terminal are explained in detail with reference to the accompanying drawings.

Recently, the short-range communication between terminals becomes popular. Since a user tends to carry a mobile terminal all the time, the mobile terminal can be utilized as a means for making a payment. A most representative one of a plurality of short range communication means may include near field communication (hereinafter abbreviated NFC).

In particular, the NFC is a sort of an electronic tag (e.g., RFID) and means a technology of transmitting data between terminals in a relatively short distance via non-contact short range wireless communication modules using a specific frequency band (e.g., 13.56 MHz, etc.).

The NFC may be widely utilized for a commodity information transmission device in supermarket or general store, a travel information transmission device for visitors, a transportation device, an entrance/exit control lock device and the like as well as for a payment.

The NFC technology is applicable to the mobile terminal 100 as well.

In case that the NFC technology is adopted, a terminal having a built-in tag, which is conceptionally extended from a conventional RFID, is activated in active mode. If so, the NFC technology may be able to play a role of a reader for reading a tag, a writer for inputting information to the tag as well as a role of the tag. And, the NFC technology may enable P2P communication between terminals.

ISO 18092 (International Standard of NFC) is compatible with ISO 14443 (International Standard of non-contact type smart card), Felica by Sony, MiFare of Philips and the like.

For instance, the NFC tag can be categorized into 4 kinds of types shown in Table 1.

**[Table 1]**

| Classification | Type 1 | Type 2 | Type 3 | Type 4 |
|---|---|---|---|---|
| RF interface | ISO 14443A | ISO 1443A | ISO 18092 | ISO 14443 |
| Speed | 106 kbps | | 212 kbps | 106 ~ 424 kbps |
| Protocol | Self-command | Self-command | Felica protocol | ISO 14443 ~ 4 |
| | | | | ISO 7816~4 |
| Memory size | 1 KB or smaller | 2 KB or smaller | 1 MB or smaller | 64 KB or smaller |
| Applied fields | Low-capacity tag for single application service | | High-capacity tag for multi-application service | |

Yet, the NFC tag types shown in Table 1 are just exemplary. And, it is apparent that the NFC tags can be implemented in various types.

NFC may be may be sorted out by 3 kinds of operation modes shown in Table 2. Yet, Table 2 simply shows examples of the present invention. And, it is apparent that the NFC is available in other operation modes.

**[Table 2]**

| MODE | Description |
|---|---|
| Device-to-device communication (PSP) | Since direct communications (e.g., data transmission between smart phones, file sharing between PC and smart phone, information update between smart phones, etc.) between all devices supportive of NFC can be processed through a single contact and are implemented by a physical and intuitive user using scheme called 'contact', the data communication can be connected very conveniently. |
| Reader/Tag (R/W) | Direct information acquisition is achieved by contacting NFC smart phone with an RFID tag attached poster and a new service connection is available by providing a connection to a related website. |
| Card emulation | This mode can provide a safe mobile payment method |
| (SC) | c by combining a non-contact type smart card technology and a security technology together and can be utilized as various payment means including a public transportation card, a discount coupon and the like. If PC provides NFC, the NFC can be very conveniently usable as authentication and payment means of E-commerce. |

Moreover, a representative application service applied to the mobile terminal 100 may be classified as shown in FIG. 3. FIG. 3 is a diagram to describe a service associated with NFC (near field communication) applicable to the present invention. Yet, the detailed application service described with reference to FIG. 3 is just one example to which the present invention is applicable. And, it is apparent that other application services, to which the present invention is applicable, can be provided.

First of all, the present invention is applicable to a contact application service between mobile terminals.

For instance, the contact application service may include one of a payment service for price payment, a money transfer service via on-line account linkage, a business card information exchange service for contact, email and the like, a wireless communication access service such as a paring for a terminal-to-terminal material exchange and the like.

Secondly, the present invention is applicable to a personal information management application service.

For instance, the personal information management application service may include one of a personal authentication service for door entrance lock/unlock via authentication, electronic product user authentication for notebook and the like, an access control service for a remote control of a building, a vehicle and the like, etc.

Thirdly, the present invention is applicable to an information providing and customized advertisement related application service.

For instance, the information providing and customized advertisement related application service may include one of a guide service for a museum, a tourism information offer (voice/text), a location guide and the like, a medical service for a medical record management and the like, a car parking service for a parking location search and the like, a reservation service for a performance ticketing via a post contact, a public transportation ticketing and the like, an advertisement and coupon service for a location based advertisement, a coupon offer and the like, a product information service for a product information check, a genuine product certification, a history tracking, a manual offer, an A/S information offer and the like, a content purchase service for a content down load (e.g., an e-book download, a music download, etc.), a social network service of directly transmitting an information read from a tag to a social network, and the like.

For clarity of the following description, assume that a payment service of the mobile terminal 100 may include a card payment service.

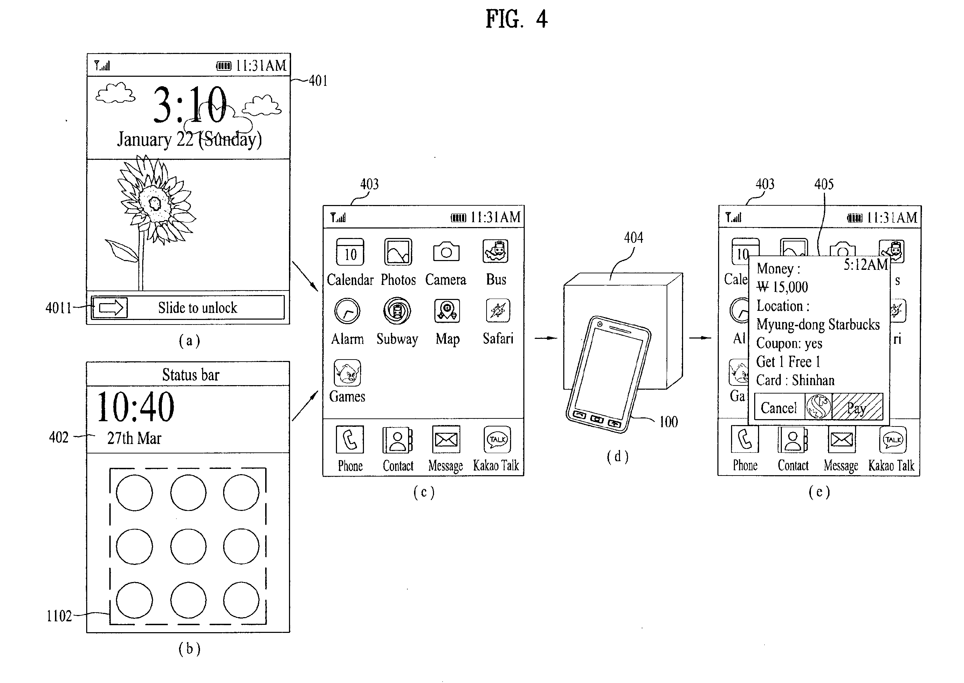

Yet, when a payment service of the mobile terminal is used through an NFC function, a screen of the mobile terminal should be in a manipulation-possible state (i.e., a screen unlocked state). Problems occurring in this case are described with reference to FIG. 4 as follows.

FIG. 4 is a diagram of display screen configuration to implement a process for making a payment using an NFC function of a terminal according to a related art.

Referring to FIG. 4, general locked screens 401 and 402 of a terminal are shown in FIG. 4 (a) and FIG. 4 (b), respectively. Regarding a mobile terminal having a touchscreen, in order to prevent a wrong input to the mobile terminal and fortify security of the mobile terminal, it may be able to lock the mobile terminal that is unused. Such a mode may be called a locked mode of the mobile terminal. Each of the locked screens 401 and 402 is provided to release a lock from the locked mode.

A screen unlock means may be displayed on the locked screen 401/402. In this case, the screen unlock means may mean a means for unlocking the locked mode if an input, which meets a prescribed condition, is inputted via the corresponding means.

For example, the screen unlock means includes a prescribed path and an object movable within the path. While the object is touched at a 1^{st} point on the path, if the object is dragged to a 2^{nd} point on the path, the controller 180 may be able to unlock the locked screen.

For another example, the screen unlock means includes a 1^{st} touch object and a 2^{nd} touch object. If the 1^{st} touch object is touched, the controller 180 may be able to maintain the locked screen. If the 2^{nd} touch object is touched, the controller 180 may be able to unlock the locked screen.

For further example, the screen unlock means includes a drag object. While a touch to the drag object is maintained, if the drag object is dragged over a prescribed distance, the controller 180 may be able to unlock the locked screen.

In FIG. 4 (a), the locked screen 401 can be unlocked in a manner that an object 4011 is pushed to the end in arrow direction. In FIG. 4 (b), the unlocked screen 402 can be unlocked in a manner that a pattern identical to a lock pattern previously set up by a user is inputted via a pattern input part 1102. If the locked screen 401/402 is unlocked, it is switched to a home screen 403 shown in FIG. 4 (c). The mobile terminal supportive of a general NFC function is able to use the NFC function after the home screen 403 has been entered. For instance, a user of the mobile terminal buys a product and is then able to pay the price using the NFC function of the mobile terminal. In doing so, the user may be able to make a payment in a manner of releasing the lock of the mobile terminal 100 and then enabling the mobile terminal 100 to come in contact with an NFC payer 404 in a state of the home screen 403 [FIG. 4 (d)]. If the mobile terminal 100 comes in contact with the NFC payer 404, referring to FIG. 4 (e), a payment related information popup 405 is outputted to the home screen 403 and a pay item is pressed on the outputted popup 405 once more to make the payment proceed. According to the related art mentioned in the above description, since the payment can be made in a manner of unlocking the locked screen and then pressing the pay item again, it may bring temporal and procedural discomfort to the user of the mobile terminal 100.

Therefore, although a payment request is received while a locked screen is not unlocked yet, an embodiment of the present invention proposes to authorize a requested payment as soon as unlock the locked screen.

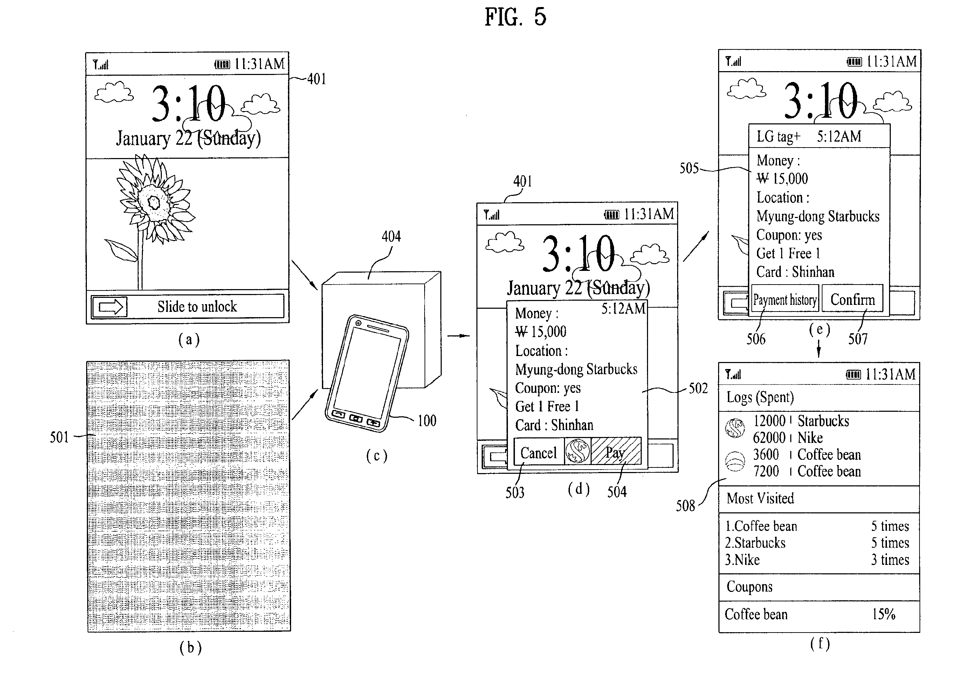

If the payment request is received while the locked screen is not unlocked yet, a payment information may be displayed on the locked screen. This is described with reference to FIG. 5 as follows.

FIG. 5 is a diagram of display screen configuration to implement a process for making a payment using an NFC function according to one embodiment of the present invention.

Referring to FIG. 5, the mobile terminal 100 according to one embodiment of the present invention may proceed to a payment screen in a state of a locked screen 401 [FIG. 5 (a)] or a display-off state 501 [FIG. 5 (b)]. While the mobile terminal is in the state of the locked screen 401 or the display-off state 501, it may come in contact with the NFC payer 404 [FIG. 5 (c)]. If so, the controller 180 may be able to output a popup window 502 indicating a payment related information in the state of the locked screen 401. In this case, the payment related information may include at least one of a payment money to be authorized, a payment location, a payment use information and a pay means. Regarding the popup window 502 shown in FIG. 5 (d), 15,000 Won is paid at Starbucks and Shinhan Card is used as the pay means. And, the popup window 502 indicating the payment related information indicates that a coupon is used. The controller 180 may be able to control a pay item 504 and a cancel item 503 to be displayed on a bottom part of the popup window 502 indicating the payment related information. If a user of the mobile terminal 100 touches the cancel item 503, the controller 180 may be able to control a state of the display to return to the state of the locked screen 401. If a prescribed region except a region, on which the popup window 502 indicating the payment related information is displayed, is touched, the controller 180 may be able to control the state of the display to return to the state of the locked screen 401 like the cancel item 503 is touched.

If the user touches the pay item 504 displayed on the popup window 502, the controller 180 may be able to output a window 505 indicating that the payment has been completed. In doing so, the payment related information may be displayed on the window 505 indicating the completed payment.

The related art shown in FIG. 4 and the embodiment of the present invention shown in FIG. 5 may have the following result of comparison. First of all, according to the related art, the payment can be authorized with two inputs (i.e., an input of unlocking the locked screen and an input of touching the pay item). Yet, according to the embodiment of the present invention, if the pay item is clicked once, it is advantageous in releasing the lock and also authorizing the payment at the same time.

Referring to FIG. 5, the controller 180 may controls a payment history item 506 and/or a confirm item 507 to be displayed on a bottom part of the window 505 indicating the completed payment [FIG. 5 (e)]. If the payment history item 506 is touched, the controller 180 may output a payment history screen 508 [FIG. 5 (f)]. The payment history screen 508 may include at least one of an information on a recently authorized payment, a most frequently paid place and a coupon information. According to the payment history screen 508 shown in FIG. 5 (f), the payment history may be sorted in accordance of a bank of a pay means used for the corresponding payment or in order of payment made. Alternatively, the payment history may be sorted in accordance of a paid amount.

If the user touches the confirm item 507 displayed on the window 505 indicating the completed payment, the controller 180 may control the screen to return to the locked screen 401.

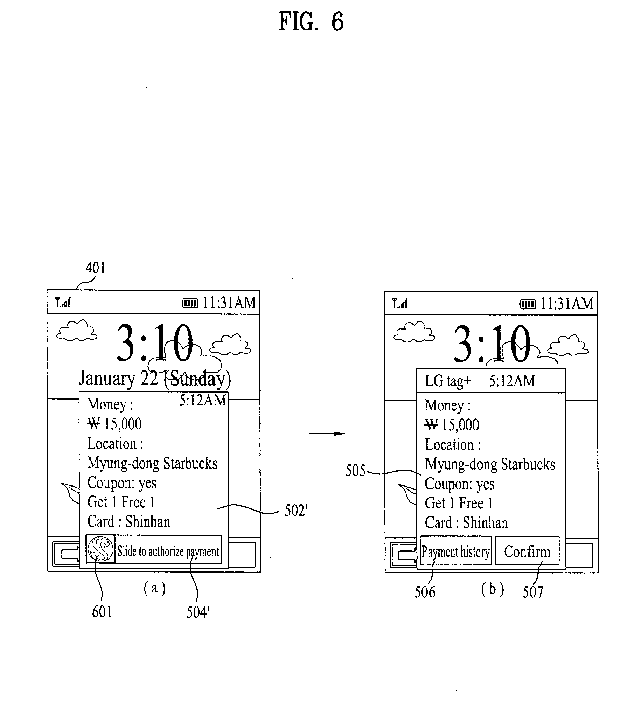

FIG. 6 is a diagram of display screen configuration to implement a method of authorizing a requested payment according to another embodiment of the present invention.

Referring to FIG. 6, if a payment is requested, a popup window 502 displayed on a locked screen 401 to indicate a payment related information thereon may include a slide bar 504'. In this case, the slide bar 504' is an object playing the same role as the pay item 504 shown in FIG. 5. In particular, a slide object 601 is arranged within the slide bar 504'. In more particular, the slide object 601 may be represented as an icon (e.g., a bank information of the pay means, a card company information, etc.) indicating a pay means. If a user slides the slide object 601 in right direction within the slide bar 504', the controller 180 unlocks a locked screen and also authorizes the requested payment at the same time. If the payment is authorized, as mentioned in the foregoing description, the controller 180 may be able to output a window 505 indicating the completed payment to the screen.

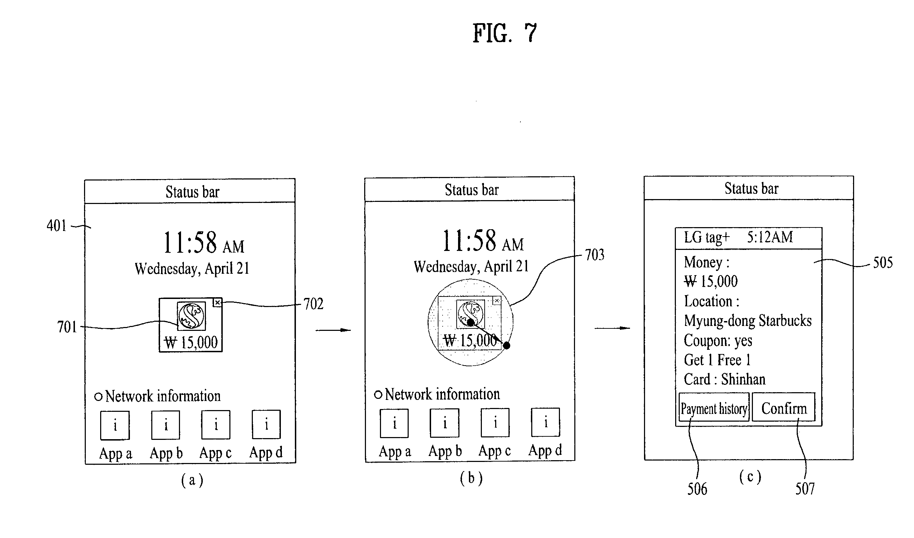

FIG. 7 is a diagram of display screen configuration to implement a method of authorizing a requested payment by a user input according to another embodiment of the present invention.

In particular, FIG. 7 (a) shows a case that a mobile terminal comes in contact an NFC payer in a state of a locked screen 401. As mentioned in the foregoing description, if the mobile terminal contacts with the NFC payer, the controller 180 may output a popup window 502 indicating a payment related information. Alternatively, referring to FIG. 7 (a), the controller 180 may be able to output a payment authorization object 701. In this case, the payment authorization object 701 may include the payment related information. For instance, referring to FIG. 7 (a), the payment related information displayed on the payment authorization object 701 may include at least one of a pay means and a payment amount. According to FIG. 7 (a), the payment authorization object 701 indicates that Shinhan Card is used as the pay means and that the payment amount is 15,000 Won.

FIG. 7 (b) shows a screen for authorizing a payment while the payment authorization object 701 is outputted.

Referring to FIG. 7 (b), if the user of the mobile terminal touches the payment authorization object 701, the controller 180 may be able to output a drag boundary 703 of a circular shape having a prescribed radius centering on the payment authorization object 701. If the user intends to authorize the payment, the user may be able to drag the payment authorization object 701 over the drag boundary 703 while touching the payment authorization object 701. If the drag is performed over the drag boundary 703 while the payment authorization object 701 is touched, the controller 180 may be able to authorize the payment. As mentioned in the foregoing description, the controller 180 authorizes the payment and is then able to output the window 505 indicating the completed payment.

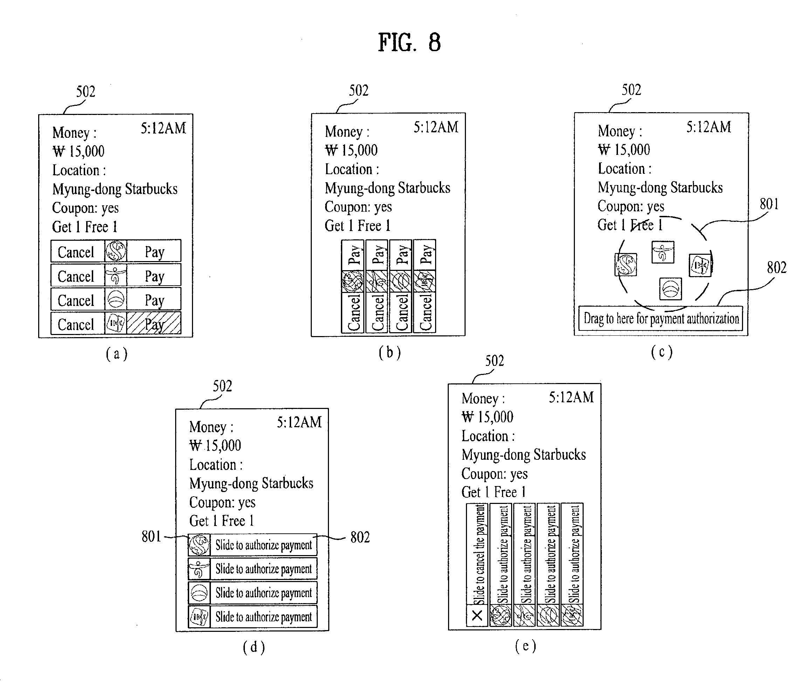

FIG. 8 is a diagram of display screen configuration for examples of a method of selecting a pay means from a plurality of pay means. In FIGs. 8 (a) to 8 (c), a popup window 502 indicating a payment related information is shown.

Referring to FIG. 8, it can be observed that a plurality of pay means exist. The payment information displayed on the popup window 502 may be able to include a payment amount, a payment location, a coupon information, and at least one of a plurality of pay means.

Referring to FIG. 8 (a), the controller 180 may be able to output cancel and pay items in landscape direction to the popup window 502 indicating the payment related information together with the information on each of a plurality of the pay means. A user of the mobile terminal may be able to make a request for authorization of a payment by touching the pay item matching the pay means select to make the payment from a plurality of the pay means. If the touch to the corresponding pay item is inputted, the controller 180 may be able to authorize the payment using the corresponding pay means.

Referring to FIG. 8 (b), a plurality of the pay means are arranged in portrait direction with the same format shown in FIG. 8 (a).

Referring to FIG. 8 (c), an icon 801 indicating a pay means and a drag bar 802 may be outputted to the popup window 502 indicating the payment related information. The icon 801 indicating the pay means may be displayed as icons indicating a plurality of the pay means, respectively. A user touches the icon matching the pay means to use in making the payment and is then able to drag the touched icon to the drag bar 802. If this touch & drag is inputted, the controller 180 is then able to authorize the payment using the pay means matching the touched & dragged icon.

Referring to FIG. 8 (d), a slide bar corresponding to each of a plurality of the pay means can be outputted to the popup window 502 indicating the payment related information. The slide bar has the same configuration of the former slide bar described with reference to FIG. 6 and its details shall be omitted from the following description. The user may be able to input an authorization of the payment in a manner of pushing the slide object 801 of the pay means selected for the payment to a right end of the slide bar 802. If an authorization input of the payment is inputted, the controller 180 authorizes the payment and is then able to output a window 505 indicating the completed payment.

Referring to FIG. 8 (e), a plurality of the pay means shown in FIG. 8 (d) are arranged in portrait direction. A process for a user to input a payment authorization is identical to the former process described with reference to FIG. 8 (d) and its details shall be omitted from the following description.

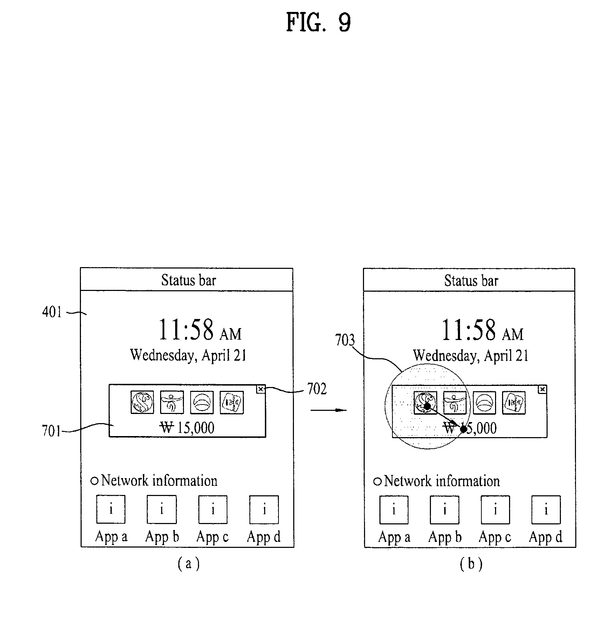

FIG. 9 is a diagram of display screen configuration for another example of a method of selecting a pay means from a plurality of pay means.

Referring to FIG. 9, when the mobile terminal is contacted with the NFC payer, the controller 180 may be able to output a plurality of icons 701 matching a plurality of the pay means, respectively. If a user touches the icon 701 matching the pay means selected to use in making a payment, the controller 180 may be able to output a drag boundary 703 of a circular shape having a prescribed radius centering on the icon 701 matching the corresponding pay means. If the user intends to authorize the payment, the user may be able to drag the icon 701 over the drag boundary 703 while touching the icon 701. If the drag is performed over the drag boundary 703 while the icon 701 is touched, the controller 180 may be able to authorize the payment. As mentioned in the foregoing description, the controller 180 authorizes the payment and is then able to output the window 505 indicating the completed payment.

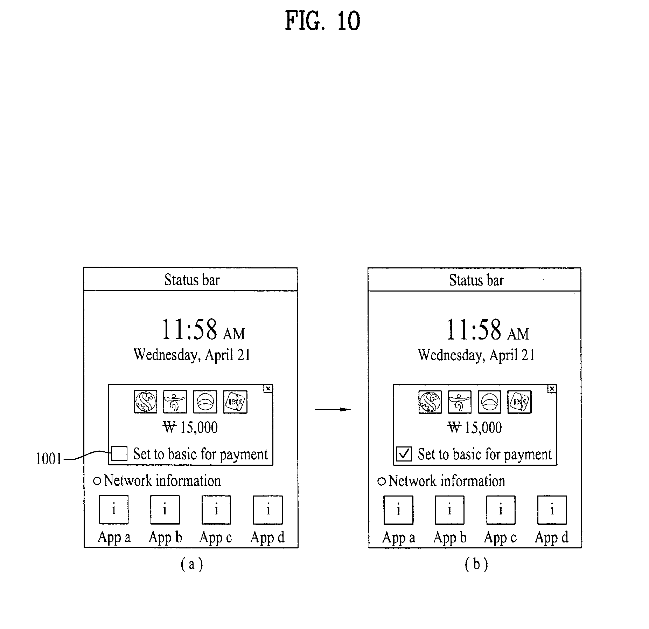

FIG. 10 is a diagram of display screen configuration for further example of a method of selecting a pay means from a plurality of pay means.

Referring to FIG. 10, the controller 180 may be able to output a payment setting window 1001 for checking/unchecking. A method for a user to input a payment authorization is identical to the former method described with reference to FIG. 9 and its details shall be omitted from the following description. While the payment setting window 1001 is checked, if an authorization of a payment using a pay means selected from a plurality of pay means is inputted by a user, the controller 180 sets the selected pay means to a basic pay means. Thus, once the basic pay means is set, although the mobile terminal may be able to use a plurality of the pay means, a next payment can be authorized using the basic pay means without making a request for the user to select a pay means for making the next payment. For instance, in case that a payment is authorized using a 1st pay means on the left side in FIG. 10 (b), the controller 180 may be able to output the screen shown in FIG. 7 (a) for a next payment request. In particular, an icon matching a pay means set to a basic pay means is outputted and a payment using the basic pay means can be requested.

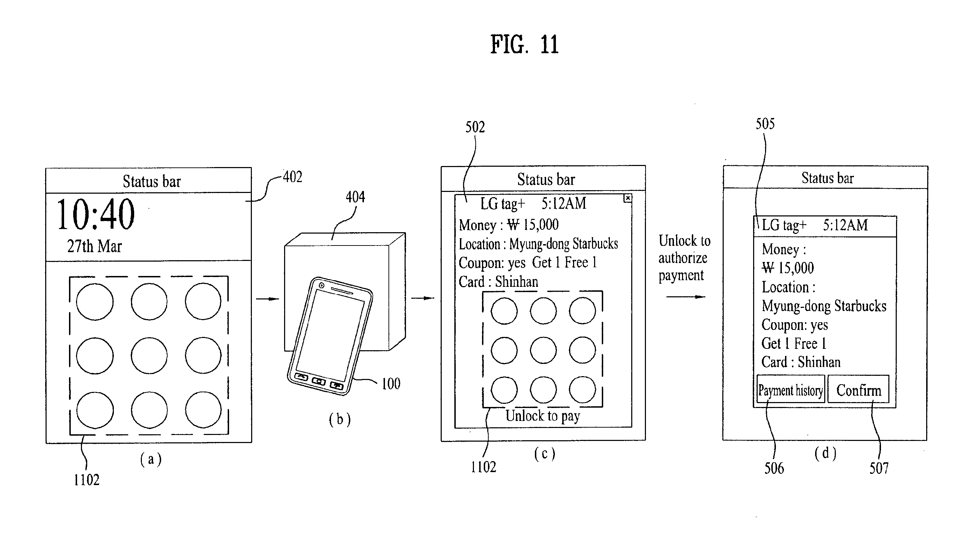

FIG. 11 is a diagram of display screen configuration to implement a method of authorizing a requested payment by a user input according to a further embodiment of the present invention.

FIG. 11 (a) shows a 2nd locked screen 402 shown in FIG. 4. And, the 2nd locked screen 402 may include a pattern recognizing unit 1102. If the same pattern previously saved by a user is inputted via the pattern recognizing unit 1102 in the locked screen 402, the controller 180 may unlock the locked screen. In case that the mobile terminal 100 is contacted with an NFC payer 404 in a state of the locked screen 402 [FIG. 11 (b)], the controller 180 may be able to output a screen shown in FIG. 11 (c). Referring to FIG. 11 (c), the controller outputs a payment related information popup window 502. In particular, the pattern recognizing unit 1102 may be included in the payment related information popup window 502. If the same pattern previously saved by the user is inputted via the pattern recognizing unit 1102 included in the payment related information popup window 502, the controller 180 unlocks the locked screen and is also able to authorize the corresponding payment at the same time. As mentioned in the foregoing description, once the payment is authorized, the controller 180 may be able to output the window 505 indicating the completed payment.

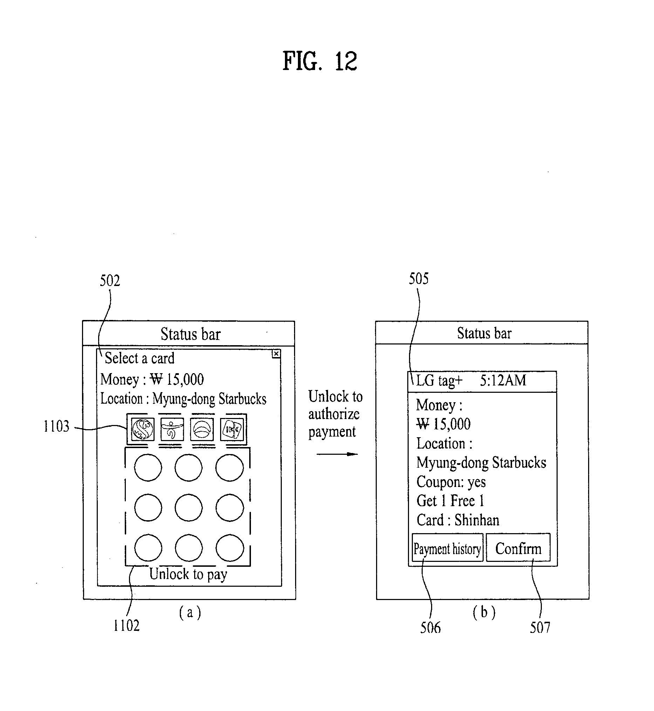

FIG. 12 is a diagram of display screen configuration for another further example of a method of selecting a pay means from a plurality of pay means.

FIG. 12 (a) shows a screen when the mobile terminal 100 is contacted with an NFC payer 404.

Referring to FIG. 12 (a), the controller 180 may be able to output a pay means selecting window 1103 to a popup window 502 indicating a payment related information. A user may be able to select a pay means in a manner of touching a desired pay means displayed on the pay means selecting window 1103. If a user inputs a selection of a pay means and a correct pattern is inputted via the pattern recognizing unit 1102, the controller 180 authorizes the corresponding payment and is the able to output a window 505 indicating the completed payment. The steps following the step of outputting the window 505 indicating the completed payment are identical those mentioned in the foregoing description and their details shall be omitted.

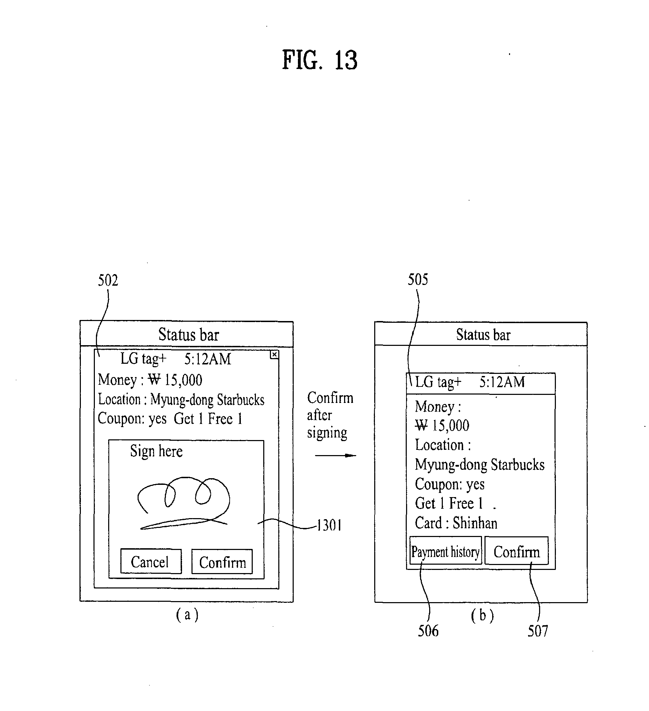

FIG. 13 is a diagram of display screen configuration for another example of a popup window for requesting a payment authorization.

Referring to FIG. 13 (a), the controller 180 may control a user signature input unit 1301 to be included in a popup window 502 indicating a payment related information. If a payment is requested from an NFC payer, the controller 180 controls the user signature input unit 1301 to be outputted in a manner of being included in the popup window 502 indicating the payment related information. If a user signature is inputted via the user signature input unit 1301, the controller 180 authorizes the corresponding payment and is then able to output a window 505 indicating the completed payment. The steps following the step of outputting the window 505 indicating the completed payment are identical those mentioned in the foregoing description and their details shall be omitted.

Accordingly, embodiments of the present invention provide various effects and/or features.

According to at least one of embodiments of the present invention, even if a display is turned off, a payment service can be available quickly and conveniently using NFC (near field communication) function.

Effects obtainable from the present invention may be non-limited by the above mentioned effect. And, other unmentioned effects can be clearly understood from the following description by those having ordinary skill in the technical field to which the present invention pertains.

It will be appreciated by those skilled in the art that the present invention can be specified into other form(s) without departing from the spirit or scope of the inventions.

In addition, the above-described methods can be implemented in a program recorded medium as computer-readable codes. The computer-readable media may include all kinds of recording devices in which data readable by a computer system are stored. The computer-readable media may include ROM, RAM, CD-ROM, magnetic tapes, floppy discs, optical data storage devices, and the like for example and also include carrier-wave type implementations (e.g., transmission via Internet). Further, the computer may include the controller 180 of the terminal.

It will be appreciated by those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal (100) comprising:
a short range communication unit (114);
a display unit (151);
a user input unit (130); and
a controller (180), if a payment request is externally received via the short range communication unit (114) in a state of a locked screen of the display unit (151), outputting a payment related information and a screen unlock means to the locked screen, the controller (180), if the locked screen is unlocked via the screen unlock means, authorizing the payment request.

2. The mobile terminal (100) of claim 1, wherein the controller (180) further controls the payment related information on the authorized payment to be outputted to the display unit (151).

3. The mobile terminal (100) of claims 1 or 2, wherein if a plurality of pay means exist, the controller (180) outputs a plurality of screen unlock means matching a plurality of the pay means for the requested payment, respectively.

4. The mobile terminal (100) of claim 3, wherein if the locked screen is unlocked via one of a plurality of the screen unlock means, the controller (180) authorizes the payment using the pay means matching the screen unlock means used to unlock the locked screen.

5. The mobile terminal (100) of any one of claims 1 to 4, wherein the user input unit (130) further receives an input of a payment signature of a user for the requested payment and wherein the controller (180) authorizes the payment based on the payment signature of the user.

6. The mobile terminal (100) of any one of claims 1 to 5, wherein the payment related information comprises at least one selected from the group consisting of a pay means, a payment amount, a payment location and a coupon use/unused.

7. The mobile terminal (100) of claim 2, further comprising a memory configured to store the payment related information on the authorized payment, wherein the controller (180) further controls a history of the payment related information stored in the memory to be outputted to the display unit (151).

8. The mobile terminal (100) of claim 7, wherein the controller (180) further outputs a statistics information on the authorized payment related information stored in the memory.

9. A method of controlling a mobile terminal, comprising the steps of:
externally receiving a request for a payment in a state of a locked screen of a display unit (151) using short range communication;
outputting a payment related information on the requested payment and a screen unlock means; and
if the locked screen is unlocked via the screen unlock means, authorizing the requested payment.

10. The method of claim 9, further comprising the step of further controlling the payment related information on the authorized payment to be outputted to the display unit (151).

11. The method of claims 9 or 10, wherein if a plurality of pay means exist, the outputting step comprises the step of outputting a plurality of screen unlock means matching a plurality of the pay means for the requested payment, respectively.

12. The method of claim 11, the authorizing step comprising the step of authorizing the payment using the pay means matching the screen unlock means used to unlock the locked screen.

13. The method of claim 9, further comprising the step of receiving an input of a payment signature of a user, wherein the authorizing step comprises the step of authorizing the payment based on the payment signature of the user.

14. The method of claim 12, further comprising the step of storing the payment related information on the authorized payment, wherein the outputting step comprises the step of further outputting a history of the stored payment related information.

15. The method of claim 12, the outputting step comprising the step of further outputting a statistics information on the stored payment related information.
